# EUROPEAN PATENT APPLICATION

(11) **EP 3 352 477 A1**
(43) Date of publication of application: **25.07.2018**
(21) Application number: 16846060.8
(22) Date of filing: 22.06.2016
(51) Int. Cl.: H04R 11/02, H04R 31/00

(54) **SOUND GENERATION DEVICE AND PRODUCTION METHOD THEREFOR**

(30) Priority: 16.09.2015 JP 2015183078
(71) Applicant: Alps Electric Co., Ltd., Tokyo 145-8501 (JP)
(72) Inventor: SATO, Kiyoshi, Tokyo 145-8501 (JP); SATO, Hideji, Tokyo 145-8501 (JP); NUMATA, Taishi, Tokyo 145-8501 (JP); SATO, Yutaka, Tokyo 145-8501 (JP)
(74) Representative: Schmitt-Nilson Schraud Waibel Wohlfrom Patentanwälte Partnerschaft mbB
(86) International application number: PCT/JP2016/068485
(87) International publication number: WO 2017/047187

(57) **Abstract**

OBJECT

To provide a sound generation device and a production method therefor, which can position a magnetic field generation unit and an armature, and enable assembling without requiring adjustment.

MEANS OF SOLUTION

A magnetic field generation unit 20 is mounted on a frame 5. The magnetic field generation unit 20 is formed by an upper yoke 21, a lower yoke 22, and side yokes 23 and 23. An upper magnet 24 is fixed to the upper yoke 21, and a lower magnet 25 is fixed to the lower yoke 22. The magnetic field generation unit 20 is fixed by being butted against a driving end mounting surface 5a of the frame 5. An armature 32 has a folded part 32b and a base end part 32e, and the base end part 32e is fixed to the driving end mounting surface 5a. By assembling each member on the frame 5, mutual positional relationships can be determined with a high accuracy.

## Description

### TECHNICAL FIELD

The present invention relates to a sound generation device provided with an armature that extends parallel to a vibration plate and vibration of the armature is transmitted to the vibration plate, and to a production method therefor.

### BACKGROUND ART

Patent Document 1 describes an invention related to a sound generation device (sound transducer).

This sound generation device has a holding frame fixed inside a case body. The holding frame has an opening that is covered by a resin film, and a vibration plate formed by a thin metal plate is adhered on the resin film.

An armature that is formed by a magnetic material is accommodated inside the case body. The armature has a vibration part and a fixed part that are integrally formed, and the fixed part is positioned and fixed to the holding frame. A coil mounting part is formed on the armature, a coil is fixed to this coil mounting part, and the vibration part is arranged within a space part of at a coil winding center.

A pair of fixing pieces is integrally formed on the armature, and the yoke is fixed in a state sandwiched between the fixing pieces. The yoke is formed by a first member that is bent to a U-shape, and a plate-shaped second member that is fixed in a state across sidewalls of the first member. One magnet is fixed to a bottom inner surface of the first member, and another magnet is fixed to an inner surface of the second member. The vibration part of the armature is positioned between the upper and lower magnets that oppose each other. A free end part of the vibration part and the vibration plate are connected by a beam part.

In the sound generation device having the structure described above, the armature is magnetized by a voice current applied to the coil, and the vibration part vibrates due to this magnetization and a magnetic field of the magnet. This vibration is transmitted to the vibration plate via the beam part, and sound is generated by the vibration of the vibration plate.

### PRIOR ART DOCUMENTS

### PATENT DOCUMENTS

Patent Document 1: Japanese Laid-Open Patent Publication No. 2012-4850

### DISCLOSURE OF THE INVENTION

### PROBLEM TO BE SOLVED BY THE INVENTION

In the structure of Patent Document 1, the fixed part of the armature is fixed to the holding frame, the coil mounting part and the fixing pieces are formed on this armature, the coil is fixed to the coil mounting part, and the yoke is fixed in the state sandwiched between the fixing pieces. According to this structure, the coil and the yoke are mutually positioned and fixed on the armature, before fixing the armature on the holding frame, and for this reason, it is difficult to perform an efficient assembling operation using a robot to successively assemble each of the parts on the holding frame.

In addition, due to size tolerance and mounting tolerance of each of the armature and the yoke accumulating between the holding frame and the magnet and affecting the same, it is difficult to set a mounting accuracy of the magnet with respect to the holding frame, and a parallelism of a magnetization surface of the magnet with respect to the holding frame, to a high accuracy.

Further, the yoke described in Patent Document 1 is formed by the first member that is bent to the U-shape, and the plate-shaped second member that is fixed in the state across the sidewalls of the first member. According to this structure, when assembling the yoke, it is necessary to insert the second member between the sidewalls of the first member in a state in which the opposing sidewalls of the first member are opened in a direction so as to separate from each other, and thereafter deform the sidewalls in a direction so as to close upon each other, before fixing both end surfaces of the second member to inner surfaces of the sidewalls. For this reason, the assembling operation is complex, and it is also difficult to perform an automated assembling operation.

The present invention solves the above described problem that is conventionally encountered, and one object of the present invention is to provide a sound generation device and a production method therefor, according to which relative positions of a magnet and an armature can be determined with a high accuracy with reference to a mounting surface of a frame.

Another object of the present invention is to provide a sound generation device and a production method therefor, according to which each part can be successively assembled with respect to a frame, and an assembling operation can be automated.

### MEANS OF SOLVING THE PROBLEM

The present invention relates to a sound generation device comprising a vibration plate, an armature extending parallel to the vibration plate, a coil having a conductor wire wound around the armature, a magnetic field generation unit opposing the armature, and a transmitting body that transmits vibration of the armature to the vibration plate, characterized in that:
the magnetic field generation unit has magnets opposing the armature, and yokes supporting the magnets, and the yokes are fixed on a mounting surface of a frame, and
a base end part of the armature is fixed with reference to the mounting surface.

The sound generation device according to the present invention may be configured so that
the magnetic field generation unit has an upper yoke and a lower yoke, and at least 2 side yokes arranged between the upper yoke and the lower yoke,
the upper yoke and the lower yoke are plate-shaped, and plate surfaces thereof are mutually parallel,
the side plates are plate-shaped, and plate surfaces thereof are perpendicular to the plate surfaces of the upper yoke and the lower yoke, respectively, wherein the plate surfaces of the side yokes are mutually parallel and arranged with a gap therebetween, and both end surfaces of the side yokes are fixed to the plate surfaces of the upper yoke and the lower yoke, respectively,
the magnets are fixed on the mutually opposing plate surfaces of the upper yoke and the lower yoke, respectively, and the armature is arranged inside the gap between the magnets opposing each other in up-and-down direction, and
an upper surface of the upper yoke forms a bonding surface that is bonded and fixed to a mounting surface of the yoke by surface bonding.

The sound generation device according to the present invention may be configured so that
the armature has a vibration part, a tip end part connected to the transmitting body, and a base end part connected to the vibration part via a folded part, wherein the vibration part and the base end part extend in parallel, and
the base end part is fixed to the mounting surface.

The sound generation device according to the present invention may be configured so that
the armature has a plate-shape including a vibration part, a tip end part connected to the transmitting body, and a base end part connecting from the vibration part, and
a support member is fixed to the mounting surface, the support member has a parallel support surface formed in parallel to the mounting surface, and the base end part is fixed to the parallel support surface.

The sound generation device according to the present invention may be configured so that
the armature has a vibration part, a tip end part connected to the transmitting body, and a base end part bent in a perpendicular direction from the vibration part, and
a support member is fixed to the mounting surface, the support member has a perpendicular support surface formed perpendicularly to the mounting surface, and the base end part is fixed to the perpendicular support surface.

The sound generation device according to the present invention may preferably be configured so that the frame is formed by a magnetic material. Alternatively, the sound generation device according to the present invention may preferably be configured so that the frame and the support member are formed by a magnetic material.

Next, the present invention relates to a production method for producing a sound generation device that includes a vibration plate, an armature extending parallel to the vibration plate, a coil having a conductor wire wound around the armature, a magnetic field generation unit opposing the armature, and a transmitting body that transmits vibration of the armature to the vibration plate, characterized in that there are provided:
fixing, on a mounting surface of a frame, the magnetic field generation unit having magnets opposing the armature, and yokes supporting the magnets;
setting a base end part of the armature with reference to the mounting surface, and fixing the base end part by moving the armature in parallel to the vibration plate to pass a space at a winding center part of the coil that is arranged adjacent to the magnetic field generation unit, and an opposing part between the magnets; and
fixing a tip end part of the armature to the transmitting body simultaneously as or, before or after fixing of the base end part.

The production method for producing the sound generation device according to the present invention may be configured so that
the armature has a vibration part, the tip end part connected to the transmitting body, and the base end part connected to the vibration part via a folded part, wherein the vibration part and the base end part extend in parallel, and
the base end part is fixed to the mounting surface.

The production method for producing the sound generation device according to the present invention may be configured so that
the armature has a plate-shape including a vibration part, the tip end part connected to the transmitting body, and the base end part connecting from the vibration part, and
a support member is fixed to the mounting surface, the support member has a parallel support surface formed in parallel to the mounting surface, and the base end part is fixed to the parallel support surface.

The production method for producing the sound generation device according to the present invention may be configured so that
the armature has a vibration part, the tip end part connected to the transmitting body, and the base end part bent in a perpendicular direction from the vibration part, and
a support member is fixed to the mounting surface, the support member has a perpendicular support surface formed perpendicularly to the mounting surface, and the base end part is fixed to the perpendicular support surface after butting the base end part against the perpendicular support surface and adjusting a distance between the mounting surface and the armature.

The production method for producing the sound generation device according to the present invention may preferably be configured so that
a cavity is formed in the tip end part of the armature, and
the tip end part and the armature are fixed after moving the armature in parallel to the vibration plate and guiding the transmitting body into the cavity.

### EFFECTS OF THE INVENTION

In the sound generation device of the present invention, the magnetic field generation unit is fixed with reference to the mounting surface formed on the frame, and the armature is fixed with reference to the mounting surface. Hence, by increasing dimensional accuracy of the magnetic field generation unit and dimensional accuracy of the armature, and dimensional accuracy of a support member in a case in which the support member is used, it is possible to maintain the relative positions of the magnet and the armature to at a high accuracy, and maintain parallelism of the magnetization surface of the magnet and the armature at a high degree of parallelism, by assembling each part on the frame.

In addition, an assembling method of the sound generation device of the present invention can perform the assembling operation to assemble each part on the frame with a high accuracy, and the assembling operation can be automated.

### BRIEF DESCRIPTION OF DRAWINGS

FIG. 1 is a perspective view illustrating an external appearance of a sound generation device in a first embodiment of the present invention;
FIG. 2 is a disassembled perspective view of the sound generation device illustrated in FIG. 1;
FIG. 3 is a cross sectional view of the sound generation device illustrated in FIG. 1 cut along a line III-III:
   FIG. 4 is a cross sectional view cut along a line IV-IV in FIG. 3 and illustrating a structure of the sound generation device excluding a casing;
   FIG. 5(A) and FIG. 5(B) are cross sectional views for explaining an assembling operation of the sound generation device in the first embodiment;
   FIG. 6(A) and FIG. 6(B) are cross sectional views for explaining the assembling operation of the sound generation device in a second embodiment of the present invention;
   FIG. 7(A) is a perspective view illustrating an armature and a vibration body used in the sound generation device in the second embodiment illustrated in FIG. 6, and FIG. 7(B) is a perspective view illustrating a modification thereof;
   FIG. 8 is a cross sectional view illustrating the sound generation device in a third embodiment of the present invention;
   FIG. 9 is a side view illustrating the sound generation device in a fourth embodiment of the present invention;
   FIG. 10 is a perspective view illustrating the armature used in the sound generation device in the fourth embodiment; and
   FIG. 11 is a graph illustrating amplitudes of the armatures used in each of the embodiments.

### MODE OF CARRYING OUT THE INVENTION

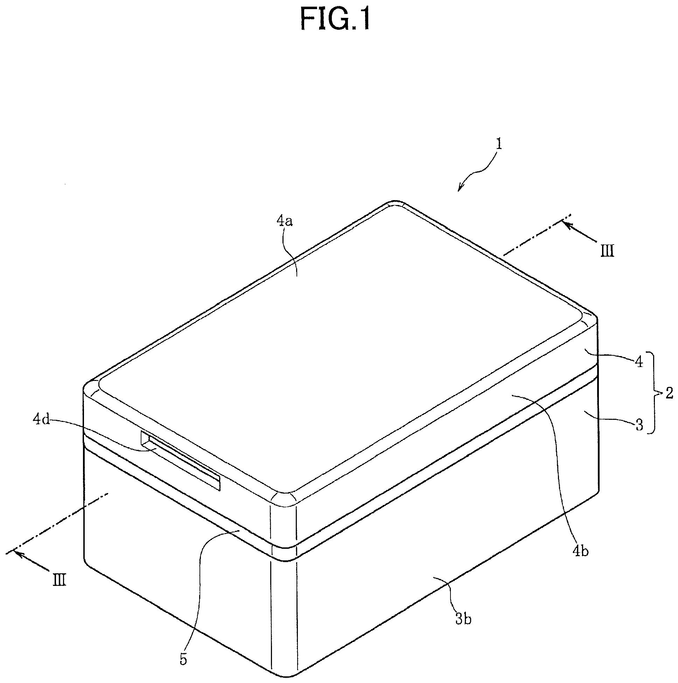

FIG. 1 through FIG. 3 illustrate a sound generation device 1 in a first embodiment of the present invention.

The sound generation device 1 has a casing 2. The casing 2 is formed by a lower casing 3 and an upper casing 4. The lower casing 3 and the upper casing 4 are made of a synthetic resin or a metal that is a nonmagnetic material, by press molding or die-casting.

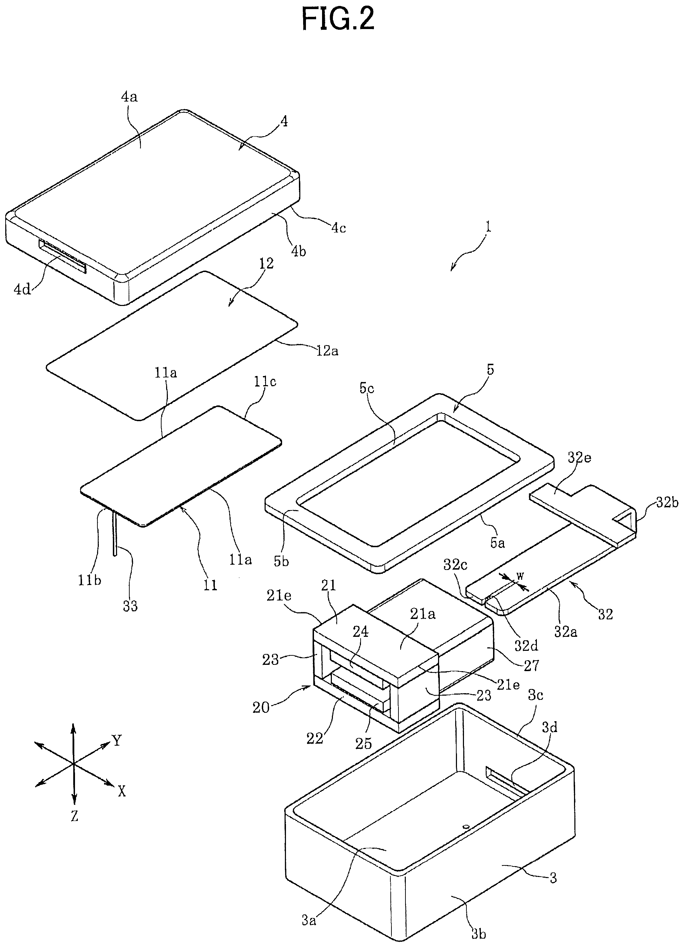

As illustrated in FIG. 2, the lower casing 3 has a bottom part 3a, a sidewall part 3b surrounding 4 sides, and an open end 3c at an upper end of the sidewall part 3b. The upper casing 4 has a ceiling part 4a, a sidewall part 4b surrounding 4 sides, and an open end 4c at a lower end of the sidewall part 4b. An internal space of the lower casing 3 is larger than an internal space of the upper casing 4, and the upper casing 4 functions as a lid body for the lower casing 3.

A frame 5 is sandwiched between the open end 3c of the lower casing 3 and the open end 4c of the upper casing 4. Although not illustrated in FIG. 2, a positioning mechanism using male-female fitting is formed between the open end 3c of the lower casing 3 and the frame 5, and a positioning mechanism using male-female fitting is formed between the open end 4c of the upper casing 4 and the frame 5. The lower casing 3, the upper casing 4, and the frame 5 are positioned by these positioning mechanisms, and the lower casing 3, the upper casing 4, and the frame 5 are fixed to each other by an adhesive agent or the like.

As illustrated in FIG. 2, the frame 5 is formed by a plate member having a uniform thickness in a Z-direction, and a lower plane in FIG. 2 forms a driving end mounting surface 5a, and an upper plane in FIG. 2 forms a vibrating end mounting surface 5b. An opening 5c at a central part of the frame 5 is formed to penetrate the frame 5 in an up-and-down direction.

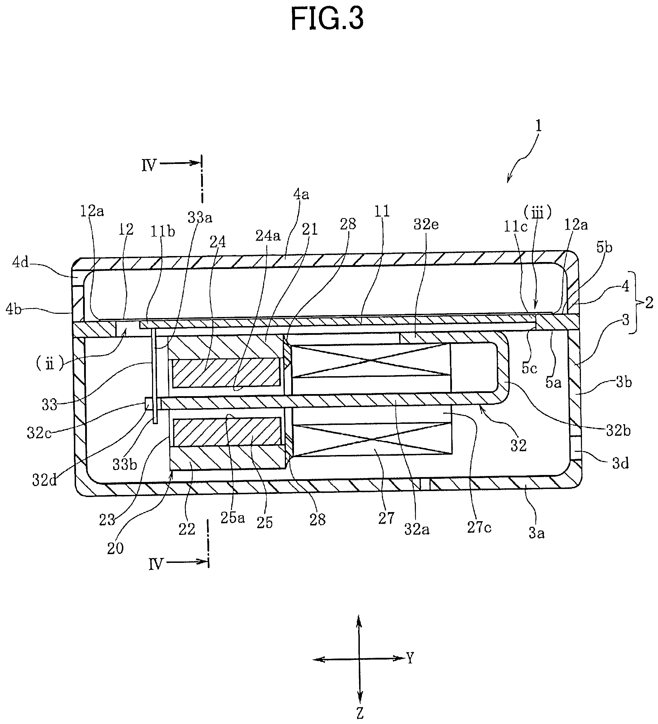

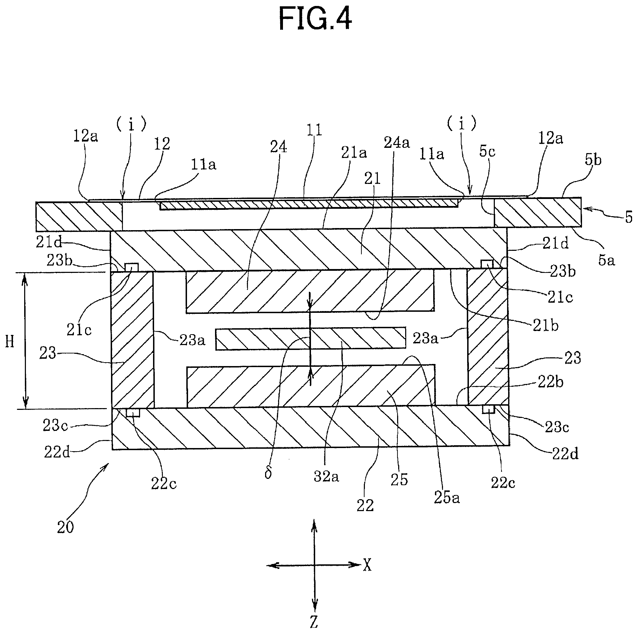

As illustrated in FIG. 3 and FIG. 4, a vibration plate 11 and a flexible sheet 12 are mounted on the vibrating end mounting surface 5b of the frame 5. The vibration plate 11 is formed by a thin metal material such as aluminum or the like, and is press-molded with a rib to increase bending strength, if necessary. The flexible sheet 12 is resiliently deformed more easily than the vibration plate 11, and is formed by a resin sheet (resin film) made of PET (Poly-Ethylene Terephthalate), nylon, polyester, or the like.

The vibration plate 11 is adhered and fixed to a lower surface of the flexible sheet 12, and an outer peripheral part 12a of the flexible sheet 12 is fixed on the vibrating end mounting surface 5b via an adhesive agent, where the vibrating end mounting surface 5b is formed by an upper surface of a frame part of the frame 5. As a result, the vibration plate 11 is supported on the frame 5 via the flexible sheet 12, to freely perform a vibrating operation.

As illustrated in FIG. 2, FIG. 3, and FIG. 4, an area of the vibration plate 11 is smaller than an opening area of the opening 5c. An area of the flexible sheet 12 is larger than that of the vibration plate 11, and is also larger than that of the opening 5c.

As illustrated in FIG. 4, gaps (i) and (i) are formed between the frame 5 and both edge parts 11a and 11a of the vibration plate 11 in a X-direction (width direction). As illustrated in FIG. 3, a gap (ii) is formed between the frame 5 and a free end 11b of the vibration plate 11. A gap (iii) narrower than the gaps (i) and (ii) is formed, or virtually no gap is formed, between the frame 5 and a fulcrum end part 11c of the vibration plate 11. The gaps (i), (ii), and (iii) are covered by the flexible sheet 12. The vibration plate 11 can vibrate using the fulcrum end part 11c as a fulcrum, so that the free end 11b is displaced in the Z-direction due to deformation and elasticity of the resilient sheet 12.

As illustrated in FIG. 2 and FIG. 3, a magnetic field generation unit 20 is mounted on the frame 5. The magnetic field generation unit 20 is assembled from an upper yoke 21, a lower yoke 22, and a pair of side yokes 23 and 23. The upper yoke 21, the lower yoke 22, and the side yokes 23 and 23 are formed by a cold-rolled steel plate that is a magnetic metal material.

In one embodiment, SPCC (for general purpose) prescribed by JIS G 3141 is used as the cold-rolled steel plate. The SPCC is an inexpensive material that can be worked with ease. In addition, SPCD (for drawing), SPCE (for deep drawing), SPCF (for non-aging deep drawing), and SPCG (for non-aging extra deep drawing) prescribed by JIS G 3141 may be used as the cold-rolled steel plate.

SPCC includes steel (Fe) as a main component, and impurities such as 0.15% or less of carbon (C), 0.60% or less of manganese (Mn), 0.100% or less of phosphor (P), and 0.05% or less of sulfur (S). Saturation flux density of SPCC is approximately 2.0 T (Tesla). A proportion of the impurities in the cold-rolled steel plate is smaller than that of SPCC in the case of SPCD, SPCE, SPCF, and SPCG, in this order. For this reason, the saturation flux density of such cold-rolled steel materials is 2.0 T or higher.

As illustrated in FIG. 4, the upper yoke 21 and the lower yoke 22 respectively have a plate shape, and are arranged in the Z-direction with a gap therebetween. The upper yoke 21 and the lower yoke 22 have the same rectangular shape with the same size, and have the same thickness. An outer plate surface of the upper yoke 21 facing up in FIG. 4 forms a bonding surface 21a to be bonded to the frame 5, and an inner plate surface of the upper yoke 21 facing down in FIG. 4 forms an opposing surface 21b. An inner plate surface of the lower yoke 22 facing down in FIG. 4 forms an opposing surface 22b.

The side yokes 23 and 23 have a plate shape, with thicknesses that are the same as the thicknesses of the upper yoke 21 and the lower yoke 22. Mutually opposing plate surfaces of the side yokes 23 and 23 form side opposing surfaces 23a and 23a, respectively. The side yokes 23 and 23 are arranged in the X-direction with a gap therebetween, at a vertical orientation in which the side opposing surfaces 23a and 23a are mutually parallel and the side opposing surfaces 23a and 23a are perpendicular to the opposing surface 21b of the upper yoke 21 and the opposing surface 22b of the lower yoke 22.

As illustrated in FIG. 4, the pair of side yokes 23 and 23 has the same height H in the Z-direction. The side yokes 23 and 23 have upper end surfaces 23b and 23b facing up in FIG. 4, and lower end surfaces 23c and 23b facing down in FIG. 4. The upper end surfaces 23b and 23b of the side yokes 23 and 23 are butted against the opposing surface 21b of the upper yoke 21, and the lower end surfaces 23c and 23c of the side yokes 23 and 23 are butted against the opposing surface 22b of the lower yoke 22.

As illustrated in FIG. 4, recesses 21c and 21c are formed in regions of the opposing surface 21b of the upper yoke 21 where the upper end surfaces 23b and 23b are bonded. The recesses 21c and 21c are formed continuously on inner sides of sides 21d and 21d of the upper yoke 21, parallel to the sides 21d and 21d. Recesses 22c and 22c are formed in regions of the opposing surface 22b of the lower yoke 22 where the lower surfaces 23c and 23c are bonded. The recesses 22c and 22c are formed continuously on inner sides of sides 22d and 22d of the lower yoke 22, parallel to the sides 22d and 22d.

The recesses 21c and 21c, and the recesses 22c and 22c may be formed intermittently. In addition, instead of forming the recesses 21c and 21c in the upper yoke 21 and the recesses 22c and 22c in the lower yoke 22, recesses may be formed in the upper end surfaces 23b and 23b of the side yokes 23 and 23, and in the lower end surfaces 23c and 23c of the side yokes 23 and 23. Alternatively, the recesses may be formed in the upper yoke 21 and the low yoke 22, and also in the upper end surfaces 23b and 23b ad the lower end surfaces 23c and 23c of the side tokes 23 and 23.

An adhesive agent is coated between the upper end surfaces 23b and 23b of the side yokes 23 and 23, and the opposing surface 21b of the upper yoke 21 to be bonded to the upper end surfaces 23b and 23b, to fix the side yokes 23 and 23 to the upper yoke 21. In this case, the adhesive agent fills the recesses 21c and 21c, and the upper end surfaces 23b and 23b and the opposing surface 21b are firmly fixed together. Similarly, an adhesive agent is also coated between the lower end surfaces 23c and 23c of the side yokes 23 and 23, and the opposing surface 22b of the lower yoke 22 to be bonded to the lower end surfaces 23c and 23c, to fix the side yokes 23 and 23 to the lower yoke 22. In this case, the adhesive agent fills the recesses 22c and 22c, and the lower end surfaces 23c and 23c and the opposing surface 22b are firmly fixed together.

In addition, by providing the recesses 21c and 22c, the adhesive agent coated at a bonding part between the upper end surfaces 23b and 23b and the opposing surface 21b is less likely to spread out from the bonding part, and the adhesive agent coated at a bonding part between the lower end surfaces 23c and 23c and the opposing surface 22b is less likely to spread out from the bonding part. For this reason, the assembling operation of the 4 yokes 21, 22, 23, and 23 can easily be automated.

Further, the upper end surfaces 23b and 23b and the lower end surfaces 23c and 23c of the side yokes 23 and 23 are preferably cut using a wire-saw. By performing this cutting, the height H of the side yokes 23 and 23 can be set with a high accuracy, a flatness of the upper end surfaces 23b and 23b and the lower end surfaces 23c and 23c after the cutting can be set high, and the parallelism of the upper end surfaces 23b and 23b and the lower end surfaces 23c and 23c can be set high. Machining of the sides 21d and 21d and the recesses 21c and 21c of the upper yoke 21, and machining of the sides 22d and 22d and the recesses 22c and 22c of the lower yoke 21, can be performed by dicing.

As described above, machining of the upper end surfaces 23b and 23b and the lower end surfaces 23c and 23c of the side yokes 23 and 23 can be performed with a high machining accuracy. In addition, by forming the recesses 21c and 22c, the upper end surfaces 23b and 23b of the side yokes 23 and 23 and the opposing surface 21b of the upper yoke 21 can be fixed in contiguous contact, and the lower surfaces 23c and 23c of the side yokes 23 and 23 and the opposing surface 22b of the lower yoke 22 can be fixed in contiguous contact.

Because the machining accuracy of the side yokes 23 and 23 is high, and the side yokes 23 and 23 can be fixed in contiguous contact with the upper yoke 21 and the lower yoke 22, an error in an opposing distance H between the opposing surface 21b of the upper yoke 21 and the opposing surface 22b of the lower yoke 22 in the Z-direction can be reduced. Further, the opposing distance H can be set with a high accuracy.

As illustrated in Figs. 2, 3, and 4, in the magnetic field generation unit 20, the upper magnet 24 is fixed to the opposing surface 21b of the upper yoke 21, and the lower magnet 25 is fixed to the opposing surface 22b of the lower yoke 22. A gap δ is formed between a lower surface 24a of the upper magnet 24 and an upper surface 25a of the lower magnet 25 in the Z-direction. Each of the magnets 24 and 25 is magnetized so that the lower surface 24a of the upper magnet 24 and the upper surface 25a of the lower magnet 25 are magnetized to mutually opposite polarities.

As described above, the opposing distance H between the opposing surface 21b of the upper yoke 21 and the opposing surface 22b of the lower yoke 22 in the Z-direction can be set with a high accuracy. For this reason, by managing thicknesses of the magnets 24 and 25, it is possible to set the gap δ with a high accuracy so that an inconsistency of the gap δ is reduced.

An upper surface of the upper yoke 21 forms the bonding surface 21a, and the bonding surface 21a is a plane. As illustrated in FIG. 4, the bonding surface 21a is bonded to the driving end mounting surface 5a at a lower surface of the frame 5, and fixed by the adhesive agent. Alternatively, an upper edge part 21e (refer to FIG. 2) of the upper yoke 21 and the driving end mounting surface 5a are fixed by laser welding.

Because the bonding surface 21a at the upper surface of the upper yoke 21 and the driving end mounting surface 5a of the frame 5 are fixed in contiguous contact, the magnetic field generation unit 20 is fixed with reference to the driving end mounting surface 5a. At the magnetic field generation unit 20, the opposing distance H between the opposing surfaces 21b and 22b can be set with a high accuracy, and the gap δ between the magnets 24 and 25 can be set with a high accuracy. Hence, the parallelism of the lower surface 24a of the upper magnet 24 and the upper surface 25a of the lower magnet 25 with respect to the driving end mounting surface 5a can be set high, and the distance from the driving end mounting surface 5a to a center of the gap δ in the Z-direction can be set with a high accuracy.

As illustrated in FIG. 2 and FIG. 3, a coil 27 is provided at a position adjacent to the magnetic field generation unit 20. A conductor wire of the coil 27 is wound around a winding centerline extending in a Y-direction. As will be described later, a vibration part 32a of an armature is inserted into a space 27c at a winding center part of the coil 27, and the conductor wire of the coil 27 is wound around a periphery of the armature.

As illustrated in FIG. 3, a bonding surface 27a is formed at an end surface facing left in the Y-direction of the coil 27, and this bonding surface 27a is fixed to the upper yoke 21 and the lower yoke 22 of the magnetic field generation unit 20 by an adhesive agent layer 28. In this case, the bonding surface 27a and the upper and lower yokes 21 and 22 are mutually fixed by being positioned so that the winding centerline of the coil 27 matches the center of the gap δ between the upper magnet 24 and the lower magnet 25.

An upper surface 27b of the coil 27 may be butted directly against the driving end mounting surface 5a at the lower surface of the frame 5, or butted via a spacer, and fixed by a bonding agent.

As illustrated in FIG. 3, an armature 32 is fixed to the driving end mounting surface 5a at the lower surface of the frame 5

The armature 32 is formed by a magnetic material, and may be formed by a cold-rolled steel plate or SUS430 (18-chromium stainless steel), for example. Alternatively, the armature 32 may be formed by a Ni-Fe alloy.

FIG. 2 illustrates a shape of the armature 32. The armature 32 is formed by a plate member having a uniform thickness, and has the vibration part 32a, and a tip end part 32c at a tip of the vibration part 32a. A cavity 32d is formed at a center part along a width direction of the tip end part 32c. The cavity 32d opens towards the Y-direction, and an opening width is indicated by W. A U-shaped folded part 32b, and a base end part 32e extending from the folded part 32b, are integrally formed at a base part of the vibration part 32a. The vibration part 32a and the base end part 32e are parallel to each other. A width of the base end part 32e in the X-direction is greater than widths of the vibration part 32a and the folded part 32b. The width of the base end part 32e in the X-direction is greater than an opening width of the opening 5c of the frame 5 in the X-direction.

The base end part 32e of the armature 32 is fixed to the driving end mounting surface 5a of the frame 5. The frame 5 and the base end part 32e are fixed by laser welding or an adhesive agent. As illustrated in FIG. 3, the vibration part 32a is inserted into the space 27c at the winding center of the coil 27, and as further illustrated in FIG. 3 and FIG. 4, inserted into the gap δ between the upper magnet 24 and the lower magnet 25. The tip end part 32c of the armature 32 extends from within the gap δ towards the front in the Y-direction.

As illustrated in FIG. 3, the free end 11b of the vibration plate 11 and the tip end part 32c of the armature 32 are connected by a transmitting body 33. The transmitting body 33 is a needle-shaped member formed by a metal or a synthetic resin, and a fixed part 33a at an upper end thereof is fixed to the vibration plate 11. A connecting end part 33b is formed at a lower end part of the transmitting body 33. The connecting end part 33b is inserted into the cavity 32d of the armature 32, and the connecting end part 33b and the armature 32 are fixed by an adhesive agent.

The frame 5 is preferably formed by a magnetic material. For example, the frame 5 is formed by SUS430 (18-chromium stainless steel). By forming the frame 5 from the magnetic material, when a voice current is applied to the coil 27 and a magnetic field is induced inside the armature 32, the magnetic flux can loop through the tip end part 32c of the armature 32, the space, the frame 5, and the base end part 32e of the armature 32. Hence, it is possible to increase the magnetic flux density within the vibration part 32a of the armature 32.

As illustrated in FIG. 3, when the lower casing 3 and the upper casing 4 are fixed by sandwiching the frame 5, the space inside the casing 2 is separated by the vibration plate 11 and the flexible sheet 12. A sound generation end space is formed by a space above the vibration plate 11 and the flexible sheet 12 inside the upper casing 4, and the sound generation end space communicates to an external space via a sound generation opening 4d that is formed in the sidewall part 4b of the upper casing 4. An air intake and exhaust opening 3d is formed in the sidewall part 3b of the lower casing 3, and an internal space of the lower casing 3 below the vibration plate 11 and the flexible sheet 12 communicates to outside air via the air intake and exhaust opening 3d.

Next, an operation of the sound generation device 1 will be described.

When the voice current is applied to the coil 27, the magnetic field is induced in the armature 32. The magnetic field induced in the armature 32, and a magnetic field generated within the gap δ between the upper magnet 24 and the lower magnet 25 generate vibration in the vibration part 32a of the armature 32 in the Z-direction. This vibration is transmitted to the vibration plate 11 via the transmitting body 33, to vibrate the vibration plate 11. In this case, the free end 11b of the vibration plate 11 supported by the flexible sheet 12 vibrates in the Z-direction using the fulcrum end part 11c as the fulcrum.

Sound pressure is generated in a sound generation space inside the upper casing 4 due to the vibration of the vibration plate 11, and this sound pressure is output to the outside via the sound generation opening 4d.

In the sound generation device 1, the bonding surface 21a of the upper yoke 21 of the magnetic field generation unit 20 is fixed to the driving end mounting surface 5a of the frame 5 by surface bonding. In the magnetic field generation unit 20, the opposing distance H between the upper yoke 21 and the lower yoke 22 is determined with a high accuracy by interposing the side yokes 23 and 24. As a result, the distance from the center of the gap δ between the upper magnet 24 and the lower magnet 25 to the driving end mounting surface 5a in the Z-direction can be determined with a high accuracy. In addition, the lower surface 24a of the upper magnet 24 and the upper surface 25a of the lower magnet 25 can be set to maintain a high degree of parallelism with respect to the driving end mounting surface 5a. For this reason, as illustrated in FIG. 3, the center of the gap δ extending in the Y-direction and the driving end mounting surface 5a can maintain a high degree of parallelism.

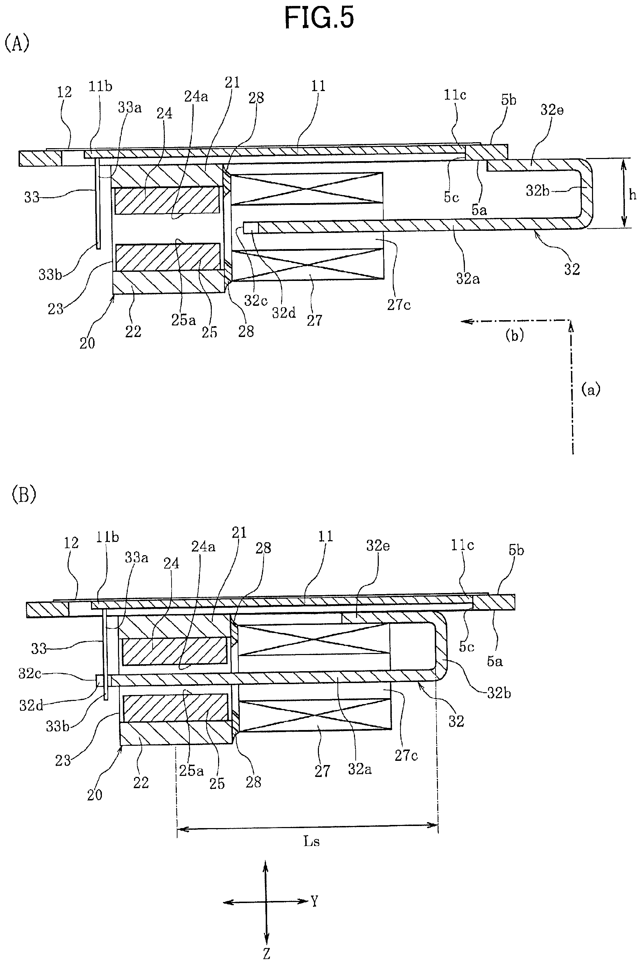

On the other hand, the base end part 32e of the armature 32 is fixed directly to the driving end mounting surface 5a, which is a mounting plane of the magnetic field generation unit 20. Hence, it is possible to reduce a tolerance affecting the relative positions in the Z-direction, between the center of the gap δ between the upper magnet 24 and the lower magnet 25, and a center of a plate thickness of the vibration part 32a of the armature 32. By setting a height h in the Z-direction of the vibration part 32a and the base end part 32e of the armature 32 illustrated in FIG. 5 with a high dimensional accuracy, it becomes possible to arrange the vibration part 32a to the center of the gap δ without requiring adjustment. In addition, the vibration part 32a, the lower surface 24a of the upper magnet 24, and the upper surface 25a of the lower magnet 25 can be set to have a high degree of parallelism.

Alternatively, even in a case in which an adjusting operation is required to align the vibration part 32a to the center of the gap δ, it is possible to reduce an adjusting width, and the adjusting operation can be simplified compared to the conventional adjusting operation.

Next, an example of production processes of the sound generation device 11 will be described. In the following, the production method that fixes the armature 32 without requiring adjustment will be described.

In the production processes of the sound generation device 1, the flexible sheet 12 having the vibration plate 11 bonded thereto is mounted on the vibrating end mounting surface 5b of the frame 5, and the fixed part 33a at the upper end of the transmitting body 33 is fixed to the free end 11b of the vibration plate 11. On the other hand, the magnetic field generation unit 20 having the coil 27 connected thereto is fixed on the driving end mounting surface 5a of the frame 5, and the armature 32 is assembled on the driving end mounting surface 5a.

In this assembling operation, a suction part on a tip end of an assembling arm that is provided in an automatic assembling apparatus attaches, under suction, to a lower surface of the vibration part 32a of the armature 32 in FIG. 5.

The armature 32 is moved in a direction (a) indicated in FIG. 5(A) at a position where the tip end part 32c of the vibration part 32a is deviated to the right side from the coil 27 in this figure, so that the tip end part 32c opposes the right side of the space 27c of the coil 27 in this figure. Thereafter, the assembling arm is moved along the Y-direction parallel to the vibration plate 11, and the armature 32 is moved in a direction (b) indicated in FIG. 5(A), so that the vibration part 32a of the armature 32 is inserted inside the space 27c of the coil 27 and the gap δ between the upper magnet 24 and the lower magnet 25.

The magnetic field generation unit 20 is fixed with reference to the driving end mounting surface 5a of the frame 5. For this reason, when the dimensional accuracy (particularly the height h) of the armature 32 is determined with a high accuracy, the center of the plate thickness of the vibration part 32a of the armature 32 matches the center of the gap δ between the upper magnet 24 and the lower magnet 25 with a high accuracy, by moving the armature 32 in the direction (a) as illustrated in FIG. 5(A), pushing the base end part 32e of the armature 32 against the driving end mounting surface 5a of the frame, moving the base end part 32e in the direction (b) while making sliding contact with the driving end mounting surface 5a, and fixing the armature 32 on the frame 5 at a predetermined position, as illustrated in FIG. 5(B).

The assembling operation described above does not require the adjusting operation, and the base end part 32e of the armature 32 and the frame 5 can be fixed by laser spot welding or the adhesive agent, immediately after assembling the armature 32, to complete the assembling.

The plate thickness of the armature 32 is 0.15 mm to 0.35 mm, and relatively thin. Accordingly, in a case in which the base end part 32e of the armature 32 and a lower surface 31b of a support member 31 are fixed by laser welding, it is possible to weld the base end part 32e and the frame 5 by irradiating the laser on the base end part 32e from the lower side in the Z-direction.

Alternatively, even in a case in which the assembling operation is performed by adjusting the position of the armature 32, it is possible to reduce an adjusting range and simplify the adjusting operation. For example, the assembling arm is moved in the Z-direction to move the armature 32 in the direction (a), and the armature 32 is adjusted to a position where the armature 32 does not make contact with the driving end mounting surface 5a of the frame 5 and is separated from the driving end mounting surface 5a in the Z-direction by a predetermined distance. Next, the assembling arm is moved in the Y-direction while maintaining the position in the Z-direction, to insert the vibration part 32a inside the space 27c of the coil 27 and the gap δ between the upper magnet 24 and the lower magnet 25. After completion of this adjusting operation, the base end part 32e of the armature 32 and the driving end mounting surface 5a of the frame 5 are fixed by the laser spot welding or the adhesive agent, and the assembling of the armature 32 ends.

By the mounting process including this adjusting operation, it is also possible to match the vibration part 32a of the armature 32 to the center of the gap δ between the upper magnet 24 and the lower magnet 25, with a high accuracy.

Accordingly, the magnetic field generation unit 20 and the armature 32 are assembled with reference to the driving end mounting surface 5a that forms a common reference plane. Hence, it is possible to match the vibration part 32a of the armature 32 to the center of the gap δ between the upper magnet 24 and the lower magnet 25, virtually without performing the adjusting operation, or by only performing a simple adjusting operation when the adjustment is required.

As illustrated in FIG. 2, the cavity 32d is formed at the tip end part 32c of the armature 32, and the opening width W of the cavity 32d is wider than a width (diameter) of the connecting end part 33b at the lower end part of the transmitting body 33. Accordingly, as illustrated in FIG. 5(A) and FIG. 5(B), when assembling the armature 32 by sliding the armature 32 in the direction (b), it is possible to guide the connecting end part 33b of the transmitting body 33 into the cavity 32d, without applying an external force with respect to the transmitting body 33.

After assembling the armature 32 as described above and fixing the base end part 32e of the armature 32 to the driving end mounting surface 5a, the connecting end part 33b of the transmitting body 33 and the tip end part 32c of the armature 32 are fixed by an adhesive agent or the like.

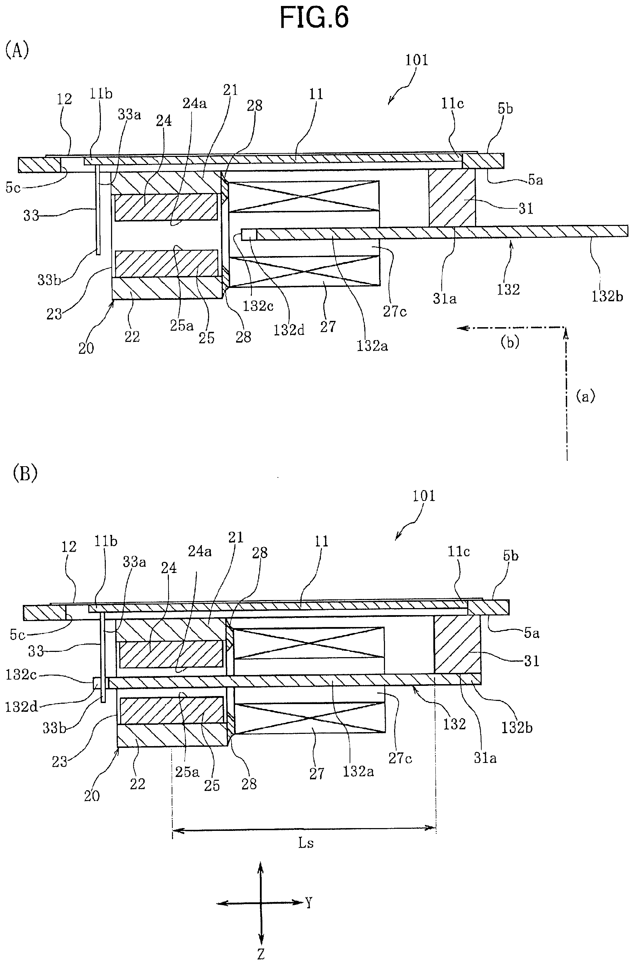

FIG. 6(A) and FIG. 6(B) illustrate a body of a sound generation device 101 in a second embodiment of the present invention.

As illustrated in FIG. 6, this sound generation device 101 has a support member 31 fixed to the driving end mounting surface 5a at the lower surface of the frame 5. The support member 31 is formed by a magnetic material, such as SUS430 or the like, and a parallel support surface 31a that is parallel to the driving end mounting surface 5a is formed at a lower surface of the support member 31. An armature 132 is fixed to the parallel support surface 31a.

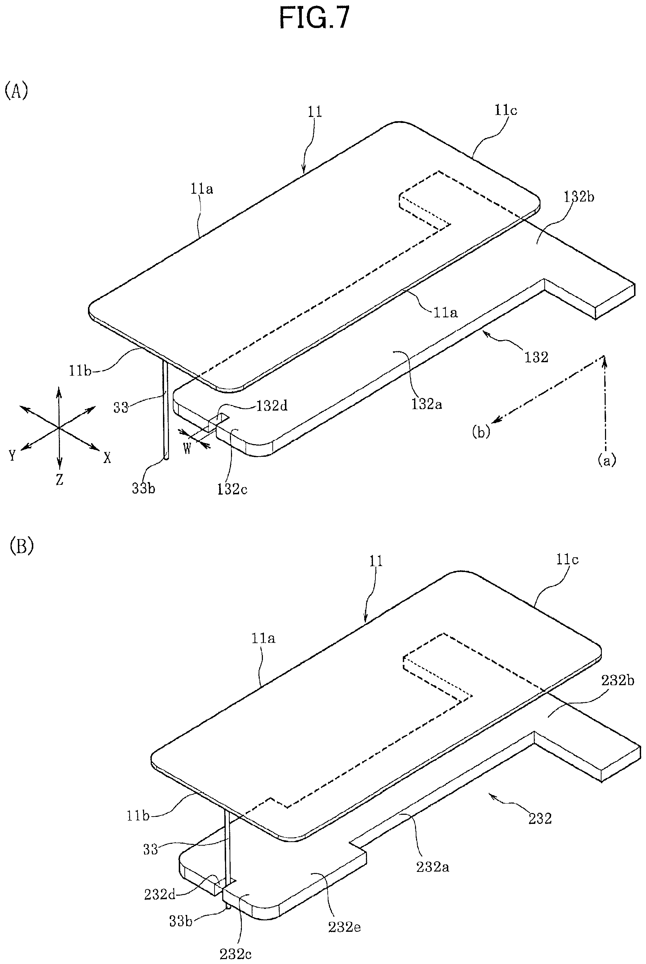

As illustrated in FIG. 7(A), the armature 132 is plate-shaped, and has a vibration part 132a, a base end part 132b, a tip end part 132c, and a cavity 132d formed in the tip end part 132c. The base end part 132b is formed to have a width in the X-direction wider than the vibration part 132a.

In this sound generation device 101, when the support member 31 is formed to have a height in the Z-direction with a high accuracy, the vibration part 132a can be accurately positioned to the center of the gap δ between the upper magnet 24 and the lower magnet 25, by butting the base end part 132b against the parallel support surface 31a of the support member 31 and fixing the base end part 132b to the parallel support surface 31a.

An assembling method that is used may hold a lower surface of the base end part 132b of the armature 132 by a suction part of an assembling arm, move the armature 132 in a direction (a) illustrated in FIG. 6(A) and FIG. 7(A), butting the armature 132 against the parallel support surface 31a, and moving the armature 132 in a direction (b) while making sliding contact with the parallel support surface 31a. As illustrated in FIG. 6(B), the armature 132 is inserted into the space 27c of the coil 27 and the gap δ between the upper magnet 24 and the lower magnet 25, and the base end part 132b and the support member 31 are fixed by laser spot welding or an adhesive agent.

In addition, the connecting end part 33b of the transmitting body 33 is guided into the cavity 132d of the armature 132, and the connecting end part 33b is fixed to the armature 132 by an adhesive agent.

By the operation described above, the armature 132 can be assembled without requiring adjustment, and relative positions of the magnetic field generation unit 20 and the vibration part 132a can be set with a high accuracy.

Alternatively, the armature 132 may be held by the suction part of the assembling arm and moved in the direction (a) as illustrated in FIG. 6(A), and the armature 132 may be assembled by moving the armature 132 in the direction (b) without butting against the parallel support surface 31a while maintaining a distance between the driving end mounting surface 5a and the vibration part 132a to a predetermined value, to fix the base end part 132b and parallel support surface 31a by laser spot welding or an adhesive agent. Even in a case in which such an adjusting operation is performed, it is possible to minimize the adjusting width.

FIG. 7(B) illustrates an armature 232 in a modification.

This armature 232 has a width that widens in the X-direction at a magnet opposing part 232e on a tip end to be arranged within the gap δ between the upper magnet 24 and the lower magnet 25, and has a width that narrows in the X-direction at a vibration part 232a.

The magnet opposing part 232e of this armature 232 has a large area, and thus, a large driving force can be exhibited by the magnetic flux inside the armature 232 and the magnetic field of the magnets 24 and 25. On the other hand, by making the width of the vibration part 232a narrower than that of the magnet opposing part 232e, it becomes possible to vary a bending modulus of the armature 232 according to design of the sound generation device.

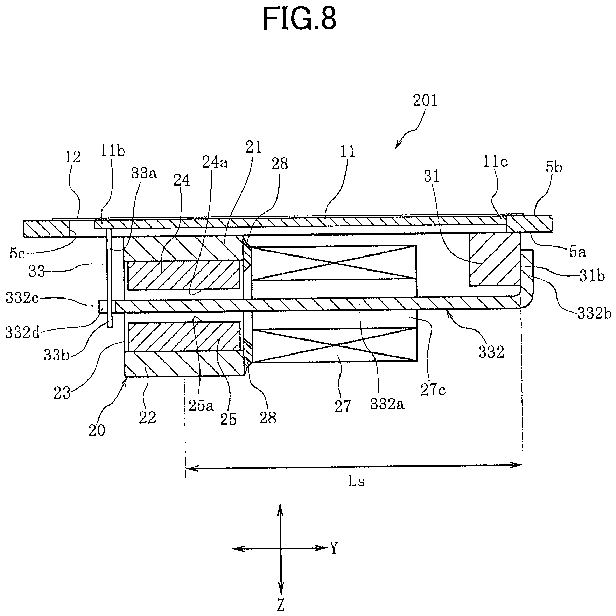

In the first embodiment illustrated in FIG. 2 through FIG. 5 and in a third embodiment illustrated in FIG. 8, the width of the magnet opposing part in the X-direction may similarly be made wider than that of the vibration part.

FIG. 8 illustrates a body of a sound generation device 201 in the third embodiment of the present invention.

An armature 332 used in the sound generation device 201 has a base end part 332b that is formed by bending a base part of a vibration part 332a at right angles (perpendicularly). In addition, a perpendicular support surface 31b, that is perpendicular to the driving end mounting surface 5a of the frame 5, is formed on the support member 31 that is formed by a magnetic material.

In this sound generation device 201, the armature 332 is fixed while performing an adjusting operation.

In an assembling operation of the sound generation device 201, a suction part of an assembling arm holds a lower surface of a vibration part 332a of the armature 332 and moves the armature 332 in a horizontal direction, to insert the vibration part 332a into the space 27c of the coil 27 and the gap δ between the magnets 24 and 25. In this case, the armature 332 is positioned in the Y-direction, by butting the base end part 332b against the perpendicular support surface 31b.

Further, the armature 332 that is held by the assembling arm is moved in the Z-direction while the base end part 332b makes sliding contact with the perpendicular support surface 31b, and the position of the armature 332 in the Z-direction is adjusted to match the vibration part 332a to the center of the gap δ between the magnets 24 and 25. After making this adjustment, the base end part 332b and the support member 31 are fixed by laser spot welding or an adhesive agent. In addition, the connecting end part 33b of the transmitting body 33 is guided into a cavity 332d, to bond the connecting end part 33b and the armature 332.

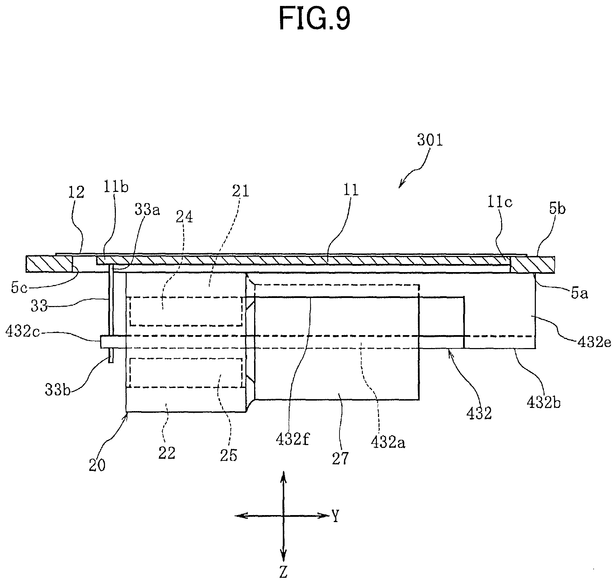

FIG. 9 illustrates a body of a sound generation device 301 in a fourth embodiment of the present invention.

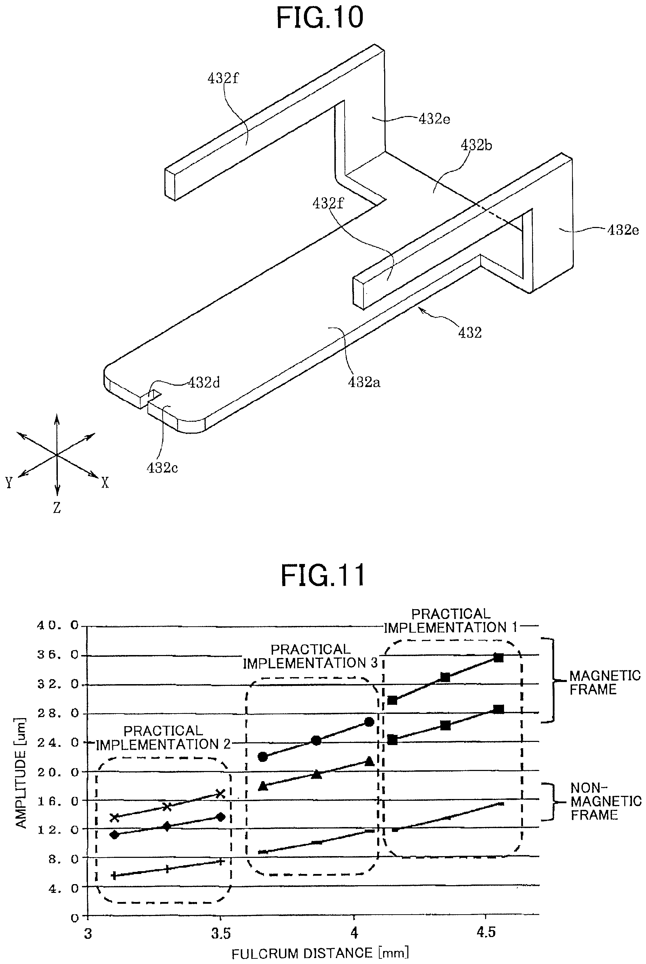

The sound generation device 301 in the fourth embodiment uses an armature 432 illustrated in FIG. 10. In the armature 432, a cavity 432d is formed at a tip end part 432c of a vibration part 432a. A base end part 432b having a width in the Z-direction that is wide is formed at a base part of the vibration part 432a, and vertical folded parts 432e and 432e are formed on both end parts in the X-direction of the base end part 432b. Stop parts 432f and 432f are formed on the respective folded parts 432e and 432e.

In this embodiment, by setting the dimensions of the armature 432 in the Z-direction with a high accuracy, it is also possible to position and fix the armature 432 by moving the armature 432 in the Y-direction while butting the stop parts 432f and 432f against the driving end mounting surface 5a of the frame 5 as illustrated in FIG. 9. The vibration part 432a can also be positioned to the center of the gap δ between the upper magnet 24 and the lower magnet 25 of the magnetic field generation unit 20.

Further, as illustrated in FIG. 9, by butting the stop parts 432f and 432f of the armature 432 against a side surface on the right side of the upper yoke 21 of the magnetic field generation unit 20 in this figure, it is also possible to position the armature 432 in the Y-direction. In this case, the stop parts 432f and 432f and the upper yoke 21 may be fixed by laser spot welding or the like, if necessary.

By connecting the upper yoke 21 of the magnetic field generation unit 20 and the armature 432 that is formed by a magnetic material, a magnetic circuit reaching the armature 432 from the magnets 24 and 25 is formed, and it is unnecessary to form the frame 5 from a magnetic material. Accordingly, it is possible to form the frame 5 by a nonmagnetic material that may increase a bonding strength of the flexible sheet 12.

### Practical Implementations

FIG. 11 illustrates compared results of characteristics of sound generation devices in each of the embodiments described above.

Practical implementation 1 illustrated in FIG. 11 is the sound generation device 1 in the first embodiment illustrated in FIG. 2 through FIG. 5, practical implementation 2 is the sound generation device 101 in the second embodiment illustrated in FIG. 6, and practical implementation 3 is the sound generation device 201 in the third embodiment illustrated in FIG. 8.

In each of the practical implementations 1, 2, and 3, 3 kinds of sound generation devices with varied fulcrum distance Ls were created. As illustrated in FIG. 5(B), FIG. 6(B), and FIG. 8, the fulcrum distance Ls a distance (mm) from a deformation starting point on the base end of the armature to a point of application of a driving force of the magnetic field generation unit 20 applied to the armature.

Further, in each of the practical implementations 1, 2, and 3, 2 kinds of sound generation devices were created, one kind having the frame 5 formed by SUS430 that is a magnetic material, and the other kind having the frame 5 formed by SUS304 that is a nonmagnetic material.

A 50 mA driving signal was applied to the coil 27 at 1 kHz, and an amplitude (range) in the ±Z-direction of the armature was measured.

From FIG. 11, it may be seen that according to each of the practical implementations, the amplitude of the armature can be made large by forming the frame 5 by the magnetic material. In addition, according to the practical implementation 1, by forming the folded part 32b at the base part of the armature 32 as illustrated in FIG. 3 and FIG. 5, the fulcrum distance of the vibration part can be made substantially longer, to enable the amplitude of the armature to become large.

### DESCRIPTION OF THE REFERENCE NUMERALS

1, 101, 201, 301 Sound Generation Device
2 Casing
4d Sound Generation Opening
5 Frame
5a Driving End Mounting Surface
5b Vibrating End Mounting Surface
11 Vibration Plate
12 Flexible Sheet
20 Magnetic Field Generation Unit
21 Upper Yoke
21a Bonding Surface
21b Opposing Surface
22 Lower Yoke
22b Opposing Surface
23 Side Yoke
23b Upper End Surface
23c Lower End Surface
24 Upper Magnet
25 Lower Magnet
27 Coil
31 Support Member
31a Parallel Support Surface
31b Perpendicular Support Surface
32 Armature
32a Vibration Part
32b Folded Part
32c Tip End Part
32d Cavity
32e Base End Part
33 Transmitting Body
132 Armature
132a Vibration Part
132b Base End Part
132c Tip End Part
132d Cavity
232 Armature
232a Vibration Part
232b Base End Part
232c Tip End Part
232d Cavity
232e Magnet Opposing Part
332 Armature
332a Vibration Part
332b Base End Part
332c Tip End Part
332d Cavity
432 Armature
432a Vibration Part
432b Base End Part
432c Tip End Part
432d Cavity
432e Folded Part
432f Stop Part

## Claims

1. A sound generation device comprising a vibration plate, an armature extending parallel to the vibration plate, a coil having a conductor wire wound around the armature, a magnetic field generation unit opposing the armature, and a transmitting body that transmits vibration of the armature to the vibration plate, **characterized in that**:
the magnetic field generation unit has magnets opposing the armature, and yokes supporting the magnets, and the yokes are fixed on a mounting surface of a frame, and
a base end part of the armature is fixed with reference to the mounting surface.

2. The sound generation device as claimed in claim 1, wherein
the magnetic field generation unit has an upper yoke and a lower yoke, and at least 2 side yokes arranged between the upper yoke and the lower yoke,
the upper yoke and the lower yoke are plate-shaped, and plate surfaces thereof are mutually parallel,
the side plates are plate-shaped, and plate surfaces thereof are perpendicular to the plate surfaces of the upper yoke and the lower yoke, respectively, wherein the plate surfaces of the side yokes are mutually parallel and arranged with a gap therebetween, and both end surfaces of the side yokes are fixed to the plate surfaces of the upper yoke and the lower yoke, respectively,
the magnets are fixed on the mutually opposing plate surfaces of the upper yoke and the lower yoke, respectively, and the armature is arranged inside the gap between the magnets opposing each other in up-and-down direction, and
an upper surface of the upper yoke forms a bonding surface that is bonded and fixed to a mounting surface of the yoke by surface bonding.

3. The sound generation device as claimed in claim 1 or 2, wherein
the armature has a vibration part, a tip end part connected to the transmitting body, and a base end part connected to the vibration part via a folded part, wherein the vibration part and the base end part extend in parallel, and
the base end part is fixed to the mounting surface.

4. The sound generation device as claimed in claim 1 or 2, wherein
the armature has a plate-shape including a vibration part, a tip end part connected to the transmitting body, and a base end part connecting from the vibration part, and
a support member is fixed to the mounting surface, the support member has a parallel support surface formed in parallel to the mounting surface, and the base end part is fixed to the parallel support surface.

5. The sound generation device as claimed in claim 1 or 2, wherein
the armature has a vibration part, a tip end part connected to the transmitting body, and a base end part bent in a perpendicular direction from the vibration part, and
a support member is fixed to the mounting surface, the support member has a perpendicular support surface formed perpendicularly to the mounting surface, and the base end part is fixed to the perpendicular support surface.

6. The sound generation device as claimed in any of claims 1 to 3, wherein the frame is formed by a magnetic material.

7. The sound generation device as claimed in claim 4 or 5, wherein the frame and the support member are formed by a magnetic material.

8. A production method for producing a sound generation device that includes a vibration plate, an armature extending parallel to the vibration plate, a coil having a conductor wire wound around the armature, a magnetic field generation unit opposing the armature, and a transmitting body that transmits vibration of the armature to the vibration plate, **characterized in that** there are provided:
fixing, on a mounting surface of a frame, the magnetic field generation unit having magnets opposing the armature, and yokes supporting the magnets;
setting a base end part of the armature with reference to the mounting surface, and fixing the base end part by moving the armature in parallel to the vibration plate to pass a space at a winding center part of the coil that is arranged adjacent to the magnetic field generation unit, and an opposing part between the magnets; and
fixing a tip end part of the armature to the transmitting body simultaneously as or, before or after fixing of the base end part.

9. The production method for producing the sound generation device as claimed in claim 8, wherein
the armature has a vibration part, the tip end part connected to the transmitting body, and the base end part connected to the vibration part via a folded part, wherein the vibration part and the base end part extend in parallel, and
the base end part is fixed to the mounting surface.

10. The production method for producing the sound generation device as claimed in claim 8, wherein
the armature has a plate-shape including a vibration part, the tip end part connected to the transmitting body, and the base end part connecting from the vibration part, and
a support member is fixed to the mounting surface, the support member has a parallel support surface formed in parallel to the mounting surface, and the base end part is fixed to the parallel support surface.

11. The production method for producing the sound generation device as claimed in claim 8, wherein
the armature has a vibration part, the tip end part connected to the transmitting body, and the base end part bent in a perpendicular direction from the vibration part, and
a support member is fixed to the mounting surface, the support member has a perpendicular support surface formed perpendicularly to the mounting surface, and the base end part is fixed to the perpendicular support surface after butting the base end part against the perpendicular support surface and adjusting a distance between the mounting surface and the armature.

12. The production method for producing the sound generation device as claimed in any of claims 8 to 11, wherein
a cavity is formed in the tip end part of the armature, and
the tip end part and the armature are fixed after moving the armature in parallel to the vibration plate and guiding the transmitting body into the cavity.
